# EUROPEAN PATENT APPLICATION

(11) **EP 4 257 104 A1**
(43) Date of publication of application: **11.10.2023**
(21) Application number: 23020086.7
(22) Date of filing: 22.02.2023
(51) Int. Cl.: A61G 17/00

(54) **SELF-SERVICE COLLECTION POINT FOR PET CARCASSES WITH REFRIGERATED BODY STORAGE AND OPTIONAL SELF-SERVICE MORTUARY**

(30) Priority: 26.04.2022 CZ 202239828 U; 31.08.2022 CZ 202240191 U; 07.04.2022 CZ 202239786 U
(71) Applicant: Memory Servis s.r.o., 470 01 Ceska Lipa (CZ)
(72) Inventor: Novák, Dalibor, 473 01 Nový Bor (CZ)
(74) Representative: Kolator, Kamil

(57) **Abstract**

A self-service collection point operates on the principle of an unattended kiosk or branch office without the presence of staff and can have several variations and types of technical solutions and the number of services provided. The technical solutions and types of services offered can be freely combined in specific self-service collection points. Self-service collection points for pet carcasses with body storage in a refrigerated box shall always be equipped with a system for the hygienic and safe preservation of the carcass of the deceased animal. They can be implemented as a simple self-service kiosk for the implementation of the basic service, located indoors or outdoors, or as a separate branch office located as a stand-alone object (building, cell) or as part of the interior of a suitable building. The collection point is always equipped with an electrical distribution system and a GSM module for electronic control of the collection point. The collection point shall be equipped with an entrance door fitted with an electronic lock with the possibility of obtaining a code to open it directly at the control terminal of the collection point or on the operator's website upon payment of a fee.

## Description

### Area of technology

The technical solution relates to the design of a self-service collection point for deceased pets and the possibility of storing the body in a refrigerated or freezer box until transport for cremation. Furthermore, the optional extension of this service to include a self-service funeral parlour for the farewell of deceased animals (pets) and lockable boxes for the transfer of urns with cremation ashes for collection.

### State of the art

At present, no similar solution exists. If a pet owner wishes to have their pet cremated, they must personally take the pet to the Animal Crematorium or have the pet transported from the pet owner or veterinary clinic to the crematorium. At the Animal Crematorium, the pet is kept in a refrigerated box until the cremation date. If the client wishes to perform a farewell / funeral ceremony for the animal, he/she must make an appointment and come to the Animal Crematorium. All of these services are dependent on the crematorium staff and their capacity and time availability. Transportation services, storage of the animal in a refrigerated box, preparation of the animal for the ceremony, audiovisual recording of the ceremony and other related services are subject to a fee. If these services of transport or handing over the animal take place outside the crematorium's operating hours, this service is not possible and the breeder has to wait until the next operating hours or the breeder pays an emergency surcharge + transport costs for picking up the animal outside the operating hours, depending on the distance. There is a fee for the service and additional costs for transporting the breeder to the crematorium's funeral parlour. Only after the ceremony can the animal be included in the cremation plan and then the burial be performed.

### The essence of the technical solution

A self-service collection point operates on the principle of an unmanned kiosk or branch without the presence of staff and can have several variations and types of technical solutions and a number of services provided. The technical solutions and types of services offered can be freely combined in specific self-service collection points. Full electronic control (electronic locks) and partial mechanical control (keys) may be combined as appropriate. Depending on the type of specific technical solution, the collection point will be equipped with the appropriate equipment, i.e. refrigeration equipment and, for example, automatic dispensers for protective gloves, cleaning agents, cleaning cloths, a trolley with a lifting platform to facilitate animal handling, etc. Equipment may vary according to the type of collection point.

### General principle of operation

Collection sites with refrigerated boxes, a funeral parlour, pick-up boxes are available 24 hours a day, 7 days a week with no standby charges or transportation costs for both transporting the animal and delivering the urn.

Self-service pet carcass collection points with body storage in a refrigerated box are always equipped with a system for the hygienic and safe preservation of the deceased animal's carcass. They can be implemented as a simple self-service kiosk for the implementation of the basic service, located indoors or outdoors, or as a separate branch located as a stand-alone object (building, cell) or as part of the interior of a suitable building.

Other services are dependent on the technical design of the specific collection point (e.g. funeral parlour, collection boxes for the collection of urns with ashes, etc.). The collection point is always equipped with electrical distribution and a GSM module for electronic control of the collection point. The site is equipped with an entrance door fitted with an electronic lock with the possibility of obtaining a code for opening directly at the control terminal of the collection site or on the operator's website, upon payment of a fee.

### Option 1 - Self-service collection point for mass cremations

- This option can be implemented as a stand-alone facility or as a space in a suitable building.
- This option can operate as a stand-alone service/module or in combination with the other collection point options.
- This option is intended only for the collection of carcasses of domestic animals whose keepers require mass cremation (not individual). This collection point is equipped with only one electronically secured access opening, which can be opened after payment for the service by means of a generated code or key access. Animals will be stored in a common storage area.

### Option 2 - Self-service collection point for individual cremations

- This option can be implemented as a stand-alone facility or as a designated area within a suitable facility.
- This option can operate as a stand-alone service/module or in combination with the other collection point options.
- This option is intended only for the collection of carcasses of domestic animals whose keepers require individual cremation (not mass cremation). This collection point is equipped with size-differentiated storage boxes according to the corresponding size categories of animals. Each storage area will be provided with a secure access opening that can be opened after payment for the service using a generated code or key access. Animals will be stored individually. Closing a specific storage box will prevent it from being used until it is emptied.

### Option 3 - Self-service collection point for individual cremations with a funeral parlour

- This option can be implemented as a stand-alone facility or as a defined space in a suitable building. The complete solution can be implemented in one or more rooms, or in a single, visually or structurally separated room.
- This option can operate as a stand-alone service/module or in combination with other collection point options (e.g. in combination with Option 2, Option 4)
- This option is only for the collection of carcasses of pets whose keepers require individual cremation (not mass cremation). This collection point is equipped with size-differentiated storage boxes according to the corresponding size categories of the animals. Each storage area will be provided with a secure access opening that can be opened after payment for the service using a generated code or key access. Animals will be stored individually. Closing a specific storage box will prevent it from being used until it is emptied.
- This option will be equipped with a self-service funeral parlour, which will be adapted and equipped to carry out the funeral ceremony and farewell to the animal friend (e.g. catafalque, seating, light display, video recording, music, etc.). They will then place the animal's body in a refrigerated storage box.

### Option 4 - Self-service collection point - urn collection (indoor and outdoor solution)

- This option can be implemented as a stand-alone facility or as a defined space in a suitable building.
- This option can operate as a stand-alone service/module or in combination with other collection point options.
- This option includes a system of lockable boxes for the contactless collection of urns with ashes and other commemorative items. The box is opened using a code that is sent to the client.

### Use of a self-service funeral parlour

The owner of the deceased animal delivers the body to the funeral parlour, where they use an electronic code to open the entrance door. The code is obtained after payment for the service, either from the operator's website address or directly from the entry terminal. Obtaining the code is subject to payment for the service and the weight category of the animal, which is indicated on the operator's website or can be read from the entry form. By generating the entry code, the specific refrigeration/freezer box is also marked according to the weight category of the animal. After the opening of the funeral parlour, the client is provided with a transfer trolley to transport the animal from the vehicle to the funeral parlour premises. In the mortuary, the animal will be given a farewell according to the wishes of the owner of the animal and according to the instructions that can be obtained from the on-site info-materials (screen, printed materials) or from the emergency phone line that operates 24/7. The animal owner then places the animal in a special hygiene bag together with a fireproof identification tag and then places it in a labelled, lockable cooler ready for use. The box is locked mechanically (with a key) or electronically. The operator shall be automatically notified of the animal's storage once the cooler has been closed. The operator shall transport the stored animals for cremation within the time interval specified in the Facility's Operating Rules - usually within 7 days or immediately after the boxes are full. The operator's staff will sanitize the facility and place the urns containing the ashes and memorial items from the completed cremations in the collection boxes, thereby preparing the facility and the refrigerated boxes for reuse. To ensure confidence and guarantee the individual cremation of the animal, each client will receive a video recording of the cremation itself and will receive back the identification tag that was with the animal throughout the cremation along with the ashes.

### Example of technical solution implementation

### Example 1

A self-service collection point for pet carcasses with body storage in a refrigerated box and an optional self-service mortuary consists of a separate building cell, the interior of which is rigidly divided into two parts - a mortuary part and a storage part with refrigerated boxes, with wheelchair access to the cell. In the first part of the space there is a modified funeral parlour and in the second there are refrigeration facilities for the storage of the body. The building is equipped with electrical distribution and GSM data module. The building is equipped with an entrance door, which is fitted with an electronic lock, with the possibility of obtaining a code to open it directly at the entrance terminal, upon payment of a fee. The funeral parlour is equipped with a mourning table (catafalque), a light display, automatic containers for protective gloves, cleaning agents, cleaning cloths and there is also a trolley with a lifting platform to facilitate the handling of the animal. The storage room is equipped with refrigerated (freezer) boxes of various sizes. The boxes have electronic locks. The facility also includes a system of lockable boxes for the contactless retrieval of urns with ashes and other memorial items. The box is opened using a code that is sent to the client. The funeral home with refrigerated boxes and mailboxes is available 24 hours a day, 7 days a week with no emergency surcharges or shipping costs for both the transport of the animal and the delivery of the urn.

### Example 2

A self-service collection point for pet carcasses with storage of the body in a refrigerated box and with an optional self-service mortuary consists of a suitable space in the interior of a building (plant room, office), the interior of which is visually divided into two parts - the mortuary part and the storage part with refrigerated boxes. In the first part of the space there is a modified funeral parlour and in the second part there are refrigeration (freezing) facilities for storing the body. The building is equipped with electrical distribution and GSM data module. The building is equipped with an entrance door, which is equipped with an electronic lock with the possibility of obtaining a code for opening directly on the website of the operator, after payment of a fee. The funeral parlour is equipped with a funeral table (catafalque), a light display, automatic containers for protective gloves, cleaning agents, cleaning cloths and there is also a trolley with a lifting platform to facilitate the handling of the animal. The storage room is equipped with refrigerated (freezer) boxes of various sizes. The boxes have mechanical locks. In the case of mechanical locks, the room is equipped with a lockable box for the keys to the boxes already occupied. The building also includes a system of lockable boxes used for non-contact retrieval of urns with ashes and other memorial items. The box is opened using a code that is sent to the client. The funeral home with refrigerated boxes and mailboxes is available 24 hours a day, 7 days a week with no emergency surcharges or shipping costs for both the transport of the animal and the delivery of the urn.

### Example 3

Stand-alone exterior building or as an interior solution in a suitable building.

Designed only for the collection of carcasses of domestic animals whose keepers require mass cremation (not individual). This collection point is provided with only one electronically secured access opening, which will be opened upon payment for the service using a generated code or key access. Animals will be stored in one common storage area.

### Example 4

Stand-alone exterior building or as an interior solution in a suitable building. Designed only for the collection of carcasses of domestic animals whose keepers require individual cremation.

This collection point shall be provided with size-differentiated refrigerated storage boxes according to the corresponding size categories of the animals. Each storage area is equipped with a secure access opening that can be opened after payment for the service by means of a generated code or key access. Animals will be stored individually. Closing a specific storage box will prevent it from being used until it is emptied.

### Industrial applicability

This technical solution is mainly useful for animal breeders in cities, urban agglomerations, for veterinary services and for animal crematoria, as making their services more accessible and cheaper.

## Claims

1. Self-service collection point for pet carcasses with body storage in a refrigerated box and with an optional self-service funeral parlour, **characterised in that** at least one refrigerated box with locking, a GSM module for electronic control and a door with an electronic lock and a control terminal communicatively connected to the operator's server is placed in the area of collection point.

2. Self-service collection point according to claim 1, **characterized in that** the space of the collection point is optically or structurally divided into two parts, wherein one part comprises at least one refrigerated box and the other part comprises a self-service funeral parlour.

3. Self-service collection point according to claim 1 or 2, **characterized in that** the collection point area comprises lockable boxes for non-contact retrieval of urns containing ashes and other memorial items.
